# EUROPEAN PATENT SPECIFICATION

(11) **EP 3 623 193 B1**
(45) Date of publication and mention of the grant of the patent: **28.07.2021**
(21) Application number: 19197314.8
(22) Date of filing: 13.09.2019
(51) Int. Cl.: B60K 1/02

(54) **LAYOUT OF A HYBRID OR ELECTRIC INDUSTRIAL VEHICLE**
LAYOUT EINES HYBRIDEN ODER ELEKTRISCHEN INDUSTRIEFAHRZEUGS
AGENCEMENT D'UN VÉHICULE INDUSTRIEL HYBRIDE OU ÉLECTRIQUE

(30) Priority: 13.09.2018 IT 201800008568
(43) Date of publication of application: 18.03.2020
(73) Proprietor: Iveco S.p.A., 10156 Torino (IT)
(72) Inventor: BERNARDINI, Alessandro, 16126 GENOVA (IT); SARCOLI, Alessio, 10141 TORINO (IT); PEREIRA LEMOS, Jose Francivaldo, SETE LAGOAS MG (BR)
(74) Representative: Faraldi, Marco

(56) References cited:
- EP-A1- 3 173 649
- EP-A2- 1 541 895
- WO-A1-2017/089449
- DE-A1-102015 215 393
- US-A1- 2006 158 024

## Description

### Technical field of the invention

The invention relates to a layout of a hybrid or electric industrial vehicle.

### State of the art

WO2014037491 discloses a transfer box, namely a power distributor, applied to a rear-wheel drive industrial vehicle.

In the layouts of figure 4 to 7 the vehicle is an electric vehicle. For the purpose of this description, "electric vehicle" means a vehicle which is not provided with other forms of drive other than the electric drive.

Said power distributor comprises a first shaft and a second shaft, which are parallel to one another, one or more gear ratios, which are interposed between the first and the second shaft; furthermore, each transmission shaft comprises two opposite ends, which are accessible from the outside of the case enclosing the power distributor, and front clutches on each one of the shafts in order to allow them to be selectively disconnected from a relative engine or from a load.

In the suggested layouts, the power distributor is spaced apart from the driving axle, to which it is connected by means of an intermediate shaft.

The layout shown in WO2014037491 can be further improved for a better distribution of the weights and for a better exploitation of the space on board the vehicle.

Other known layouts are disclosed in documents US2006/15824 A1, EP 3173649 A1, WO2017/089449 A1, DE 102015215393 A1 or EP 1541895 A1.

### Summary of the invention

The object of the invention is to provide a layout of a hybrid or electric vehicle comprising a power distributor which offers some advantages compared to the prior art.

Such object is solved by a layout and a vehicle as claimed in the appended set of claims.

The idea on which the invention is based in that of implementing a power distributor in which a portion of the case enclosing the inner components of the power distributor, such as shafts and gear trains, comprises a connection flange, which is complementary to a case of a differential gear of a driving axle of the vehicle.

In other words, a portion of the case of the power distributor is shared by the case of the differential gear. Therefore, the power distributor is directly connected to the differential gear.

Thanks to this invention, the electric vehicle can be provided with up to three electric motors. This allows manufacturers to implement motors that can easily be found in the car manufacturing industry, even though they have to be used in industrial vehicles.

Furthermore, when wheel hubs accommodate speed reducers, which allow the torque to be increased in case of full-load starting.

Furthermore, thanks to the presence of retaining rods, it is forbidden any rotation of the case of the differential gear around the axis of the wheel.

The presence of a tubular case allows the power distributor to be reached without interfering with the case of the differential gear.

### Brief description of the figures

Further objects and advantages of the invention will be best understood upon perusal of the following detailed description of an embodiment thereof with reference to the accompanying drawings merely showing non-limiting examples, wherein:
- figure 1 shows a perspective view, with partially removed parts, of an industrial vehicle layout according to the invention;
- figure 2 shows a diagram of the wheelwork of the layout of figure 1 for an electric industrial vehicle;
- figure 3 shows a variant of the diagram of figure 2 for a hybrid industrial vehicle;

### Detailed description of embodiments

The invention applies to a driving axle of an industrial vehicle. Electric vehicle means that the drive is exclusively electric and that the vehicle is not provided with any internal combustion engine.

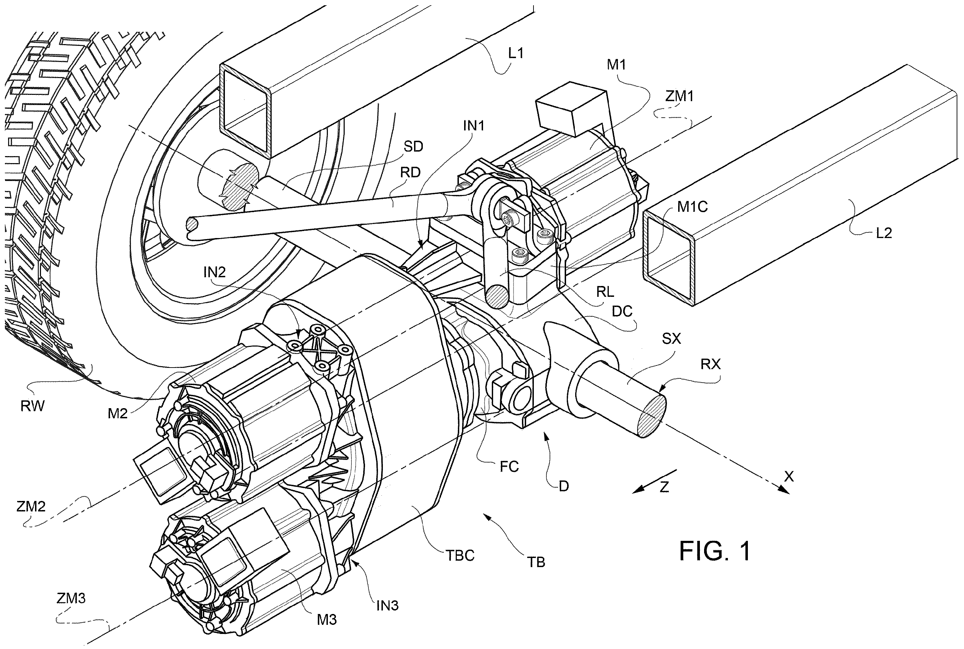

Figure 1 shows a driving axle, indicated as a whole with RX, arranged under a pair of side members L1 and L2, which help define the frame of the industrial vehicle.

The axle comprises a differential gear D comprising a case DC where a known crown wheel and pinion is built-in.

The right axle-shaft RX and the left axle-shaft SX project from the right side and from the left side, respectively, of the differential gear.

The axle-shafts can be completely lined up to the relative wheel hubs.

The case DC of the differential gear consists of at least two parts with a lid FC.

The differential gear D is associated with a power distributor TB comprising its own case TBC. The case of the power distributor consists of at least two parts, as well, and at least one of said parts also defines the aforesaid lid FC.

This implies that, once both the differential gear and the power distributor are entirely assembled, they form one single body.

A traditional axle can advantageously be adjusted for a hybrid or electric application, reducing the number of components.

The power distributor comprises at least two power inputs IN1, IN2 arranged perpendicularly to the axle-shafts RX and SX.

At least a first one of said at least two inputs is preferably arranged so that the shaft ZM1 of a first electric motor M1 associated with it is arranged, in operation, above the differential gear and is perpendicular to the axle X defined by said axle-shafts.

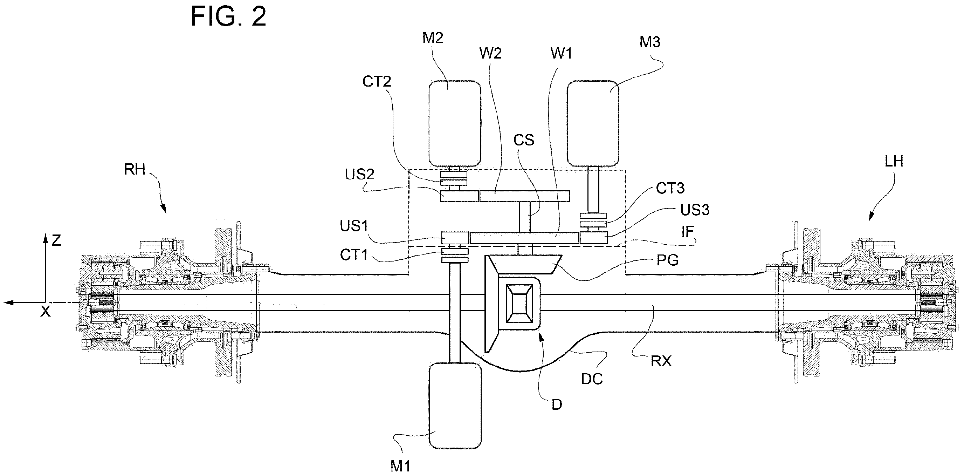

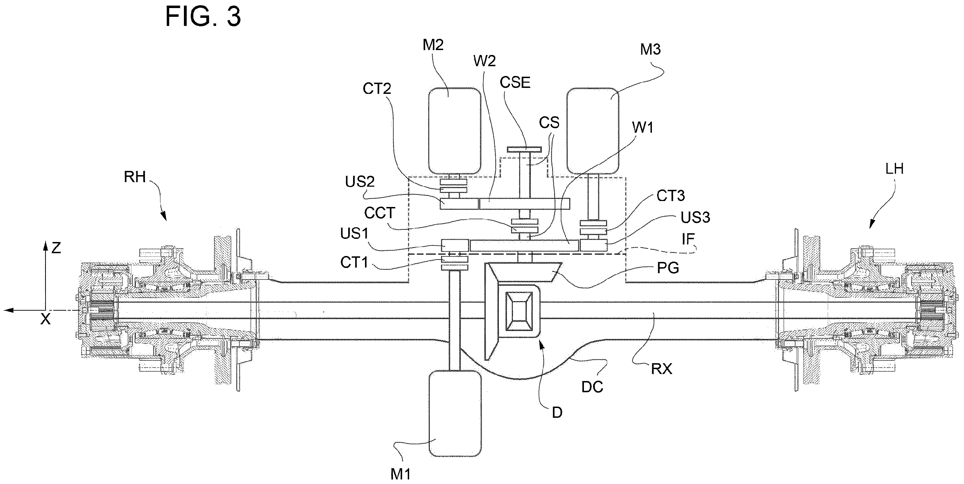

The axis ZM1 is evidently parallel to the industrial vehicle development axis Z, indicated in figures 2 and 3.

The case DC of the differential gear D has an upper interface, to which two retaining rods RD and RL are generally fixed, which counter the rotation of the case DC relative to the axis X.

According to a preferred aspect of the invention, the first electric motor M1 is associated with the power distributor by means of a tubular interconnecting case M1C with an approximately longitudinal shape, which acts as a prolongation, thus allowing the first electric motor to be connected to the power distributor without interfering with the differential gear.

Said tubular case M1C has a lower portion, which is complementary to the upper interface of the case of the differential gear, and an upper portion, which reproduces the upper interface of the case of the differential gear. This implies that the retaining rods RD and RL are indirectly connected to the case of the differential gear by means of the tubular case of the first motor which rises above the differential gear.

The number of components that need to be changed relative to a traditional industrial vehicle layout advantageously is very limited.

The power distributor has a second power input IN2 approximately opposite the first input IN 1. Therefore, when the second electric motor M2 is associated with the power distributor, the relative drive shaft extends along the axis MZ2, which is parallel and approximately coaxial to the axis MZ1 of the first electric motor.

Even though the first and the second electric motor, when implemented, remain parallel to one another, possible misalignments can be due to the dimensions of the wheelwork contained in the power distributor, to the number of shafts, etc..

The power distributor also comprises a third input IN3, which is parallel to the vehicle development axis Z as well and, when a third electric motor M3 is associated with it, its shaft extends along an axis ZM3, which is parallel to ZM1 and ZM2. In particular, a plane on which MZ2 and MZ3 lie is approximately vertical and, hence, approximately perpendicular to the axle RX of the industrial vehicle.

Figure 2 shows the wheelwork in detail, even though it is not realistic. Indeed, the axes of the motors M2 and M3 seem, in the plan view of figure 2, spaced apart from one another, but, according to the description above, they approximately overlap.

Therefore, a view from the top or from the bottom should substantially show a cross.

The axle RX comprises the relative axle-shafts, which converge in the differential gear D approximately arranged at the centre.

At the opposite ends, the axle-shafts converge in the right hub RH and in the left hub LH. The hubs preferably accommodate speed reducers with a fixed ratio or with a variable ratio so as to allow for a full-load starting of the vehicle.

The pinion PG of the crown wheel and pinion is keyed on a main shaft CS on which a first W1 and a second gear wheel W2 are fixed.

A first pinion US1, which can be coupled to the drive shaft of the first electric motor M1, and a third pinion US3, which can be coupled to the drive shaft of the third electric motor M3, mesh with the first gear wheel.

A second pinion US2, which can be coupled to a drive shaft of the second electric motor M2, meshes with the second gear wheel W2.

Therefore, it is evident that none of the electric motors is coaxial to the main shaft.

The two gear wheels W1 and W2 preferably do not have the same diameter and the gear ratio of the second electric motor M2 preferably is slightly different from the gear ratio of the first and of the third electric motor. In particular, the gear ratio of the second electric motor is slightly smaller, so as to deliver a greater torque at a high speed.

Each input IN1, IN2, IN3 is preferably provided with a front clutch CT1, CT2, CT3.

In a hybrid layout, the main shaft CS, besides having a first end on which the aforesaid pinion PG is keyed, has an end opposite the first one, which is accessible from the case TBC of the power distributor. Said opposite end is indicated with CSE in figure 3.

It represents a forth input connected to a drive shaft coming from the thermal drivetrain in case of a hybrid vehicle.

The thermal drivetrain comprises a heat engine, for example a Diesel or petrol engine, and a transmission with two or more gears.

Furthermore, the main shaft CS can consist of two parts, which can be connected to one another by means of a fourth front clutch CCT.

In particular, the front clutch is arranged between the first W1 and the second gear wheel W2, so that the vehicle can operate in pure electric mode disconnecting, as much as possible, the passive rotary masses.

This implies that, in case there is also the second electric motor M2, it is disconnected as well.

In a hybrid layout, the presence of the second electric motor can be subordinated to the inclination of the drive shaft joining the transmission of the drivetrain and the fourth input of the power distributor. In other words, the second motor can be eliminated in order to avoid mechanical interferences.

As you can see, figure 3 is identical to figure 2 with the exception of the presence of the fourth input and of the fourth front clutch, which divides the main shaft into two parts.

A broken line IF is shown in the figures. It represents an ideal interface between the power distributor and the differential gear according to the invention. Said interface is defined by the portion FC of the case TBC of the power distributor TB, which also defines a front or rear lid for the case DC of the differential gear D.

The inputs IN2 andlN3 preferably face forward in the driving direction of the vehicle.

The third pinion US3, which allows for the interconnection of the third electric motor to the first gear wheel W1, can be arranged laterally relative to the gear wheel W1, so as to increase the height from the ground of the power distributor. In this case, the plane on which the axes ZM2 and ZM3 lie keeps being parallel to the vehicle development axis Z, but is oblique rather than approximately vertical.

According to a preferred variant, which can be independent or be combined with the one in which the speed reducers are arranged in the hubs, the differential gear comprises a speed reducer according to EP2620311 A1.

The arrangement described herein clearly has to be considered as modular; therefore, not all electric motors are necessarily associated with the power distributor.

For example, in vehicles designed for small loads, one or two electric motors can be sufficient.

It is clear that modifications can be made to the described embodiments, that can be combined together, which do not extend beyond the scope of protection defined by the appended claims.

## Claims

1. A layout for a hybrid or electric industrial vehicle comprising a driving axle (RX) and a power distributor (TB) wherein said driving axle comprises a differential gear (D) wherein a crown wheel and pinion are housed and, to which, a left axle-shaft (SX) and a right axle-shaft (SD) are connected, arranged for guiding respective wheels (RW) into rotation, wherein said differential gear comprises a first case (DC) comprising at least two parts and said power distributor (TB) comprises a second case (TBC) comprising at least two parts, and wherein a part of said second case is shared with said first case, defining a lid for said first case,
wherein said power distributor comprises at least two inputs arranged perpendicular to said axle-shafts and wherein a first electric motor (M1) is associated with a first of said inputs so as to be overlying, in operation, said differential gear.
wherein said first electric motor is interconnected with said power distributor by means of an interconnecting case (M1C) wherein a drive shaft of said first electric motor, having a tubular elongated shape, is keyed.
**characterized in that** said interconnecting case (M1C) comprises a lower interface and an upper interface, wherein said lower interface is complementary to an upper interface of the case (DC) of the differential gear, and said upper interface of the interconnecting case (M1C) is adapted to be coupled to a pair of retaining rods (RD, RL) converging on said upper interface of the interconnecting case (M1C) for fixing said differential gear in respect to a vehicle frame (L1, L2).

2. The layout according to claim 1, wherein said power distributor comprises a main shaft (CS) having an end, on which a pinion of said crown wheel and pinion of the differential gear is keyed.

3. The layout according to one of the preceding claims, wherein said retaining rods have diverging ends fixed at an intersection point between a side member (L1, L2) of said frame and an interconnecting crossbeam of the two side members of the frame.

4. The layout according to any one of the preceding claims, wherein a second input (IN2) is arranged approximately opposite to said first input, so that a second rotation axis (ZM2) of a drive shaft of a second electric motor (M2), coupled to said second output, is parallel and approximately coaxial to a first rotation axis (ZM1) of the drive shaft of the first electric motor (M1).

5. The layout according to any one of the preceding claims, wherein said power distributor further comprises a third input parallel to said first and second input and arranged in operation below said second input.

6. The layout according to claim 5, wherein a third rotation axis (ZM3) of a drive shaft of a third electric motor (M3) coupled to said third input is defined, and wherein said third rotation axis (ZM3) and said second rotation axis (ZM2) lie on a plane approximately vertical and approximately perpendicular to said axle (RX).

7. The layout according to one of the claims 5 or 6, wherein said power distributor comprises a fourth input (CSE) arranged in operation between said second (IN2) and said third input (IN3) and wherein the industrial vehicle comprises a thermal motor propulsion comprising a drive shaft connected with said fourth input (CSE).

8. The layout according to any one of the preceding claims 5 to 7, wherein each of said first, second and third inputs (IN1, IN2, IN3) is provided with a front clutch (CT1, CT2, CT3) for disconnecting the respective clutch from the drive.

9. The layout according to any one of the preceding claims 5 to 8, wherein the power distributor comprises a main shaft (CS) on which a first (W1) and a second (W2) gear wheel are keyed and, a first (US1) and a third pinion (US3) mesh on said first gear wheel defining respectively said first and said third input of the power distributor, and wherein a second pinion (US2) meshes on said second gear wheel (W2) defining said second input (IN2).

10. The layout according to claim 11, wherein said main shaft is in two parts, connectable by means of a fourth front clutch (CCT) and wherein on a first part thereof, said pinion (PG) of the crown wheel and pinion and said first gear wheel (W1) are keyed, and wherein said second gear wheel (W2) is keyed onto said second part and wherein an end of said second part can be accessed from the outside of the timing case (TBC) of the power distributor for defining said fourth input (CSE).

11. The layout according to any one of the preceding claims, wherein a speed reducer is housed in each hub wheel (RH, LH).

12. An industrial vehicle comprising a layout according to any of the preceding claims.

## Patentansprüche

1. Layout für ein hybrides oder elektrisches Industriefahrzeug, umfassend eine Antriebsachse (RX) und einen Leistungsverteiler (TB), wobei die Antriebsachse ein Differentialgetriebe (D) umfasst, in welchem ein Kronrad und ein Ritzel untergebracht sind und mit welchem eine linke Achswelle (SX) und eine rechte Achswelle (SD) verbunden sind, dazu angeordnet, jeweilige Räder (RW) in Drehung zu versetzen, wobei das Differentialgetriebe ein erstes Gehäuse (DC) umfasst, umfassend zumindest zwei Teile, und der Leistungsverteiler (TB) ein zweites Gehäuse (TBC) umfasst, umfassend zumindest zwei Teile, wobei ein Teil des zweiten Gehäuses mit dem erstes Gehäuse geteilt wird und einen Deckel für das erste Gehäuse bildet,
wobei der Leistungsverteiler zumindest zwei Eingänge umfasst, welche senkrecht zu den Achswellen angeordnet sind und wobei ein erster Elektromotor (M1) einen ersten der Eingänge zugeordnet ist, so dass er im Betrieb das Differentialgetriebe überlagert,
wobei der erste Elektromotor mit dem Leistungsverteiler durch ein Verbindungsgehäuse (M1C) verbunden ist, wobei eine Antriebswelle des ersten Elektromotors mit einer rohrförmig verlängerten Form aufgekeilt ist,
**dadurch gekennzeichnet, dass** das Verbindungsgehäuse (M1C) eine untere Verbindung und eine obere Verbindung umfasst, wobei die untere Verbindung zu einem oberen Anschluss des Gehäuses (DC) des Differentialgetriebes komplementär ist, und die obere Verbindung des Verbindungsgehäuses (M1C) dazu vorgesehen ist, mit einem Paar von Haltestäben (RD,RL) gekoppelt zu werden, welche auf einer gemeinsamen Verbindung des Verbindungsgehäuses (M1C) zur Befestigung des Differentialgetriebes an einem Fahrzeugrahmen (L1,L2) zusammenlaufen.

2. Layout gemäß Anspruch 1, bei welchem der Leistungsverteiler eine Hauptwelle (CS) mit einem Ende aufweist, auf welchem ein Ritzel des Kronrads und ein Ritzel des Differentialgetriebes aufgekeilt sind.

3. Layout gemäß einem der vorhergehenden Ansprüche, bei welchem die Haltestäbe auseinanderlaufende Enden aufweisen, die an einem Schnittpunkt zwischen einem Seitenelement (L1, L2) des Rahmens und einem Verbindungsquerbalken der zwei Seitenelemente des Rahmens befestigt sind.

4. Layout gemäß einem der vorhergehenden Ansprüche, bei welchem der zweite Eingang (IN2) etwa gegenüberliegend dem ersten Eingang angeordnet ist, so dass eine zweite Rotationsachse (ZM2) einer Antriebswelle eines zweiten Elektromotors (M2), die mit dem zweiten Ausgang gekoppelt ist, parallel und etwa koaxial zu einer ersten Rotationsachse (ZM1) der Antriebswelle des ersten Elektromotors (M1) ist.

5. Layout gemäß einem der vorhergehenden Ansprüche, bei welchem der Leistungsverteiler ferner einen dritten Eingang umfasst, der parallel zu dem ersten und zweiten Eingang ist und im Betrieb unterhalb des zweiten Eingangs ist.

6. Layout gemäß Anspruch 5, bei welchem eine dritte Rotationsachse (ZM3) einer Antriebswelle eines dritten Elektromotors (M3), der mit dem dritten Eingang gekoppelt ist, festgelegt ist, und wobei die dritte Rotationsachse (ZM3) und die zweite Rotationsachse (ZM2) auf einer Ebene liegen, die annähernd senkrecht und annähernd senkrecht zu der Achse (RX) liegt.

7. Layout gemäß einem der Ansprüche 5 oder 6, bei welchem der Leistungsverteiler einen vierten Eingang (CSE) umfasst, der im Betrieb zwischen dem zweiten (IN2) und dem dritten Eingang (IN3) liegt, wobei das Industriefahrzeug ferner einen Verbrennungsmotorantrieb umfasst, umfassend eine Antriebswelle, die mit dem vierten Eingang (CSE) verbunden ist.

8. Layout gemäß einem der vorhergehenden Ansprüche 5 bis 7, bei welchem jeder der ersten, zweiten und dritten Eingänge (IN1, IN2, IN3) mit einer vorderen Kupplung (CT1, CT2, CT3) zum Trennen der jeweiligen Kupplung von dem Antrieb versehen ist.

9. Layout gemäß einem der vorhergehenden Ansprüche 5 bis 8, bei welchem der Leistungsverteiler eine Hauptwelle (CS) umfasst, auf welche ein erstes (W1) und ein zweites (W2) Getrieberad aufgekeilt sind, und ein erstes (US1) und ein drittes Ritzel (US3) das erste Getrieberad kämmen, wodurch jeweils der erste und der dritte Eingang des Leistungsverteilers definiert werden, und wobei das zweite Ritzel (US2) das zweite Getrieberad (W2) kämmt, wodurch der zweite Eingang (IN2) definiert wird.

10. Layout gemäß Anspruch 11, bei welchem die Hauptwelle aus zwei Teilen besteht, die durch eine vierte vordere Kupplung (CCT) verbindbar sind, und wobei auf einen ersten dieser Teile das Ritzel (PG) des Kronrads und das Ritzel und das erste Getrieberad (W1) aufgekeilt sind, und wobei das zweite Getrieberad (W2) auf den zweiten Teil aufgekeilt ist, und wobei ein Ende des zweiten Teils vom Außenbereich des Steuergehäuses (TBC) des Leistungsverteilers her zugänglich ist, zur Definition des vierten Eingangs (CSE).

11. Layout gemäß einem der vorhergehenden Ansprüche, bei welchem ein Drehzahlminderer in jedem Nabenrad (RH, LH) untergebracht ist.

12. Industriefahrzeug, umfassend ein Layout gemäß einem der vorhergehenden Ansprüche.

## Revendications

1. Agencement pour un véhicule industriel hybride ou électrique comprenant un essieu d'entraînement (RX) et un distributeur de puissance (TB) dans lequel ledit essieu d'entraînement comprend un engrenage différentiel (D) dans lequel sont logés une roue de couronne et un pignon et, auquel sont connectés un arbre d'essieu gauche (SX) et un arbre d'essieu droit (SD), agencés pour guider des roues (RW) respectives en rotation, dans lequel ledit engrenage différentiel comprend un premier carter (DC) comprenant au moins deux parties et ledit distributeur de puissance (TB) comprend un deuxième carter (TBC) comprenant au moins deux parties, et dans lequel une partie dudit deuxième carter est partagée avec ledit premier carter, définissant un couvercle pour ledit premier carter,
dans lequel ledit distributeur de puissance comprend au moins deux entrées agencées perpendiculairement auxdits arbres d'essieu et dans lequel un premier moteur électrique (M1) est associé à une première desdites entrées de manière à chevaucher, en fonctionnement, ledit engrenage différentiel,
dans lequel ledit premier moteur électrique est interconnecté audit distributeur de puissance à l'aide d'un carter d'interconnexion (M1C) dans lequel un arbre d'entraînement dudit premier moteur électrique, présentant une forme allongée tubulaire, est claveté,
**caractérisé en ce que** ledit carter d'interconnexion (M1C) comprend une interface inférieure et une interface supérieure, dans lequel ladite interface inférieure est complémentaire d'une interface supérieure du carter (DC) de l'engrenage différentiel, et ladite interface supérieure du carter d'interconnexion (M1C) est adaptée pour être couplée à une paire de tiges de retenue (RD, RL) convergeant sur ladite interface supérieure du carter d'interconnexion (M1C) pour fixer ledit engrenage différentiel par rapport à un châssis de véhicule (L1, L2).

2. Agencement selon la revendication 1, dans lequel ledit distributeur de puissance comprend un arbre principal (CS) présentant une extrémité, sur laquelle un pignon de ladite roue de couronne et un pignon de l'engrenage différentiel sont clavetés.

3. Agencement selon l'une des revendications précédentes, dans lequel lesdites tiges de retenue présentent des extrémités divergentes fixées au niveau d'un point d'intersection entre un élément latéral (L1, L2) dudit châssis et une traverse d'interconnexion des deux éléments latéraux du châssis.

4. Agencement selon l'une quelconque des revendications précédentes, dans lequel une deuxième entrée (IN2) est agencée approximativement à l'opposé de ladite première entrée, de telle sorte qu'un deuxième axe de rotation (ZM2) d'un arbre d'entraînement d'un deuxième moteur électrique (M2), couplé à ladite deuxième sortie, est parallèle et approximativement coaxial à un premier axe de rotation (ZM1) de l'arbre d'entraînement du premier moteur électrique (M1).

5. Agencement selon l'une quelconque des revendications précédentes, dans lequel ledit distributeur de puissance comprend en outre une troisième entrée parallèle auxdites première et deuxième entrées et agencée en fonctionnement sous ladite deuxième entrée.

6. Agencement selon la revendication 5, dans lequel un troisième axe de rotation (ZM3) d'un arbre d'entraînement d'un troisième moteur électrique (M3) couplé à ladite troisième entrée est défini, et dans lequel ledit troisième axe de rotation (ZM3) et ledit deuxième axe de rotation (ZM2) reposent sur un plan approximativement vertical et approximativement perpendiculaire audit essieu (RX).

7. Agencement selon l'une des revendications 5 ou 6, dans lequel ledit distributeur de puissance comprend une quatrième entrée (CSE) agencée en fonctionnement entre ladite deuxième (IN2) et ladite troisième (IN3) entrée et dans lequel le véhicule industriel comprend une propulsion à moteur thermique comprenant un arbre d'entraînement connecté à ladite quatrième entrée (CSE).

8. Agencement selon l'une quelconque des revendications 5 à 7, dans lequel chacune desdites première, deuxième et troisième entrées (IN1, IN2, IN3) est pourvue d'un embrayage avant (CT1, CT2, CT3) pour déconnecter l'embrayage respectif de l'entraînement.

9. Agencement selon l'une quelconque des revendications 5 à 8, dans lequel le distributeur de puissance comprend un arbre principal (CS) sur lequel sont clavetées une première (W1) et une deuxième (W2) roue d'engrenage et, un premier (US1) et un troisième (US3) pignon s'emboîtent sur ladite première roue d'engrenage définissant respectivement ladite première et ladite troisième entrée du distributeur de puissance, et dans lequel un deuxième pignon (US2) s'emboîte sur ladite deuxième roue d'engrenage (W2) définissant ladite deuxième entrée (IN2).

10. Agencement selon la revendication 11, dans lequel ledit arbre principal est en deux parties, pouvant être connectées à l'aide d'un quatrième embrayage avant (CCT) et dans lequel sur une première partie de celui-ci, ledit pignon (PG) de la roue de couronne et ledit pignon de ladite première roue d'engrenage (W1) sont clavetés, et dans lequel ladite deuxième roue d'engrenage (W2) est clavetée sur ladite deuxième partie et dans lequel on peut accéder à une extrémité de ladite deuxième partie depuis l'extérieur du carter de temporisation (TBC) du distributeur de puissance pour définir ladite quatrième entrée (CSE).

11. Agencement selon l'une quelconque des revendications précédentes, dans lequel un réducteur de vitesse est logé dans chaque roue de moyeu (RH, LH).

12. Véhicule industriel comprenant un agencement selon l'une quelconque des revendications précédentes.
